# EUROPEAN PATENT APPLICATION

(11) **EP 3 139 245 A1**
(43) Date of publication of application: **08.03.2017**
(21) Application number: 15189739.4
(22) Date of filing: 14.10.2015
(51) Int. Cl.: G06F 1/32

(54) **LOADING-BASED DYNAMIC VOLTAGE AND FREQUENCY SCALING**

(30) Priority: 04.09.2015 US 201514846560
(71) Applicant: MediaTek, Inc, Hsin-Chu 300 (TW)
(72) Inventor: Yang, Ying-Ting, Taipei City 231 (TW)
(74) Representative: Wright, Howard Hugh Burnby

(57) **Abstract**

Techniques related to loading-based dynamic voltage and frequency scaling are described. A method may involve measuring a loading of a first power domain. The first power domain may include one or more circuit sections each of which operating in one of a plurality of loading states. The measuring of the loading of the first power domain may involve determining a respective loading state of each of the one or more circuit sections of the first power domain. The measured loading of the first power domain may be representative of a combination of the one or more loading states of the one or more circuit sections. The method may also involve determining at least one operating parameter of the first power domain according to the measured loading of the first power domain.

## Description

### TECHNICAL FIELD

The present disclosure is generally related to voltage and frequency scaling and, more particularly, to loading-based dynamic voltage and frequency scaling.

### BACKGROUND

Unless otherwise indicated herein, approaches described in this section are not prior art to the claims listed below and are not admitted to be prior art by inclusion in this section.

Portable electronic apparatuses such as smartphones and tablet computers are typically equipped with multiple functions and features. In general, multiple power sources are provided in a portable electronic apparatus to power the multiple functions and features, and these multiple functions and features are typically controlled individually regarding their respective power supply and usage.

Dynamic voltage and frequency scaling (DVFS), a power management technique, is typically employed in portable electronic apparatuses for system power saving. In conventional approaches, runtime software for DVFS may be utilized to adjust the voltage and/or frequency, or clock rate, according to system requirement of the portable electronic apparatus. However, the software needs to synchronize with current system requirements for voltage and clock rate according to scenario usage in order to determine whether voltage scaling and/or frequency scaling (or clock rate adjustment) would be required. It also takes time for the software to synchronize with the system requirements. Moreover, DVFS by software tends to be coarse-grained as opposed to fine-grained DVFS achievable by hardware.

### SUMMARY

The following summary is illustrative only and is not intended to be limiting in any way. That is, the following summary is provided to introduce concepts, highlights, benefits and advantages of the novel and non-obvious techniques described herein. Select, not all, implementations are further described below in the detailed description. Thus, the following summary is not intended to identify essential features of the claimed subject matter, nor is it intended for use in determining the scope of the claimed subject matter.

In one example implementation, method may involve measuring a loading of a first power domain. The first power domain may include one or more circuit sections each of which operating in one of a plurality of loading states. The measuring of the loading of the first power domain may involve determining a respective loading state of each of the one or more circuit sections of the first power domain. The measured loading of the first power domain may be representative of a combination of the one or more loading states of the one or more circuit sections. The method may also involve determining at least one operating parameter of the first power domain according to the measured loading of the first power domain.

In another example implementation, a method may involve measuring a loading of a first power domain. The first power domain may include one or more circuit sections each of which operating in one of a plurality of loading states. The measured loading of the first power domain may be representative of a combination of the one or more loading states of the one or more circuit sections. The method may also involve determining a respective clock rate for each of the one or more circuit sections of the first power domain to be a clock rate among a plurality of clock rates corresponding to a respective loading state of a plurality of loading states. The plurality of clock rates may respectively correspond to the plurality of loading states.

In yet another example implementation, an apparatus may include a first power domain, a first loading measurement circuit, and a first determination circuit. The first power domain may include one or more circuit sections each of which operating in one of a plurality of loading states. The first loading measurement circuit may be coupled to the first power domain. The first loading measurement circuit may be configured to measure a loading of the first power domain by determining a respective loading state of each of the one or more circuit sections of the first power domain. The measured loading of the first power domain may be representative of a combination of the one or more loading states of the one or more circuit sections of the first power domain. The first determination circuit may be coupled to the first loading measurement circuit. The first determination circuit may be configured to determine at least one operating parameter of the first power domain according to the measured loading of the first power domain.

Advantageously, implementations in accordance with the present disclosure may, on the one hand, reduce or minimize host drive intervention and, on the other hand, increase or maximize battery life of an electronic apparatus. This is especially beneficial when implemented in a portable electronic apparatus, e.g., a wireless communication device such as a smartphone, where battery life tends to be major issue for consumers. Also advantageously, voltage scaling may more quickly and accurately adjust the voltage of a circuit section when a loading state of the circuit section varies over time. For example, when system loading is light, implementations in accordance with the present disclosure may scale down the operating voltage and, alternatively or additionally, lower the clock rate appropriately. This also contributes to prolonged battery life.

### BRIEF DESCRIPTION OF THE DRAWINGS

The accompanying drawings are included to provide a further understanding of the disclosure, and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a block diagram of an example architecture in accordance with an implementation of the present disclosure.
FIG. 2 shows an example chart of example system loading under an example scenario in accordance with an implementation of the present disclosure.
FIG. 3 is a schematic diagram of an example fast voltage adjustment device in accordance with an implementation of the present disclosure.
FIG. 4 shows an example table of loading states of circuit sections of a power domain and an example table of correlations between clock rates and voltages of circuit sections of a power domain in accordance with an implementation of the present disclosure.
FIG. 5 shows an example table of weighting coefficients of functional blocks of a power domain and an example table of clock rates and voltages corresponding to various system loadings in accordance with an implementation of the present disclosure.
FIG. 6 shows an example chart of example system loading corresponding to example operational states of functional blocks of a power domain in accordance with an implementation of the present disclosure.
FIG. 7 shows an example chart of example voltage scaling for a power domain in accordance with an implementation of the present disclosure.
FIG. 8 is a block diagram of an example apparatus in accordance with an implementations of the present disclosure.
FIG. 9 is a flowchart of an example process in accordance with an implementation of the present disclosure.
FIG. 10 is a flowchart of an example process in accordance with another implementation of the present disclosure.
FIG. 11 shows an example chart of example system loading under conventional approaches.
FIG. 12 is an example of variation in loading state of a circuit section over time.

### DETAILED DESCRIPTION

### Overview

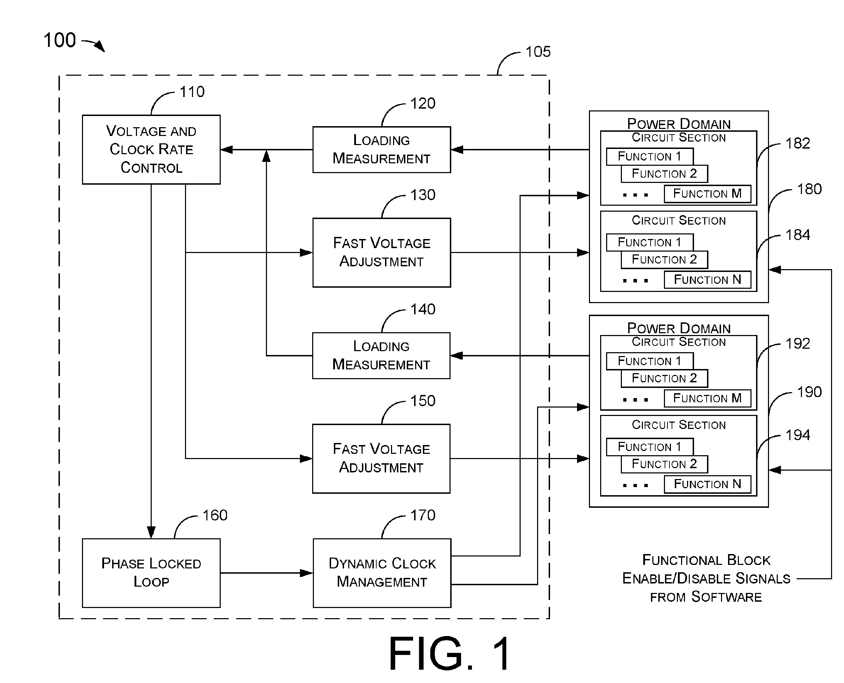

FIG. 1 illustrates an example architecture 100 in accordance with an implementation of the present disclosure. Example architecture 100 may include a control logic 105 and one or more power domains, with the control logic 105 configured to measure a respective loading of each of the one or more power domains and control or otherwise adjust at least one operating parameter of at least one power domain of the one or more power domains (e.g., voltage and/or clock rate). In the example shown in FIG. 1, two power domains, namely a first power domain 180 and a second power domain 190, are illustrated. In various implementations of the present disclosure, the quantity of power domains in example architecture 100 may be different, e.g., great than or less than 2.

Control logic 105 may include a number of components. In some implementations, each component of control logic 105 may be implemented in hardware form, e.g., electronic circuits including physical elements such as transistors, capacitors, resistors, inductors and/or memristors. Alternatively, part of one component or one or more components of control logic 105 may be implemented as hardware, firmware, middleware, software, or a combination thereof. In implementations in which there is a single one power domain, e.g., first power domain 180, control logic 105 may include at least a voltage scaling and clock rate control component 110, a first loading measurement component 120, a first fast voltage adjustment component 130, a phase locked loop (PLL) component 160 and a dynamic clock management component 170. In implementations in which there are two power domains, e.g., first power domain 180 and second power domain 190, control logic 105 may additionally include a second loading measurement component 140 and a second fast voltage adjustment component 150, as shown in FIG. 1. In other implementations in which there are more than two power domains, control logic 105 may further include respective loading measurement component(s) and respective fast voltage adjustment component(s), each for a corresponding power domain.

First loading measurement component 120 may be configured to receive loading information from first power domain 180 and configured to measure the loading (e.g., hardware loading, software loading, or a combination thereof) of first power domain 180. According to the measured loading (e.g., hardware loading, software loading, or a combination thereof) of first power domain 180, first loading measurement component 120 may determine a value of at least one operating parameter (e.g., voltage and/or clock rate) of first power domain 180, so that one or more other components of control logic 105 may adjust the operating parameter(s) in concern for first power domain 180 accordingly (e.g., by adjusting the voltage or clock rate of first power domain 180 from a current value to a different value). First loading measurement component 120 may also dynamically set and adjust a periodicity of the measurement so as to measure the loading of power domain 180 periodically. For instance, when system loading of first power domain 180 appears to vary significantly over a given period of time, first loading measurement component 120 may increase the frequency of measurement (or shorten the time between two adjacent measurements). Likewise, when there appears to be little or no variation in the system loading of first power domain 180, first loading measurement component 120 may decrease the frequency of measurement (or lengthen the time between two adjacent measurements). First loading measurement component 120 may further output data indicative of a result of the measurement and the determined at least one operating parameter of first power domain 180.

Second loading measurement component 140 may be coupled to receive loading information from second power domain 190 and configured to measure the loading (e.g., hardware loading, software loading, or a combination thereof) of second power domain 190. According to the measured loading of second power domain 190, second loading measurement component 140 may determine a value of at least one operating parameter (e.g., voltage and/or clock rate) of second power domain 190, so that one or more other components of control logic 105 may adjust the operating parameter(s) in concern for second power domain 190 accordingly (e.g., by adjusting the voltage or clock rate of second power domain 190 from a current value to a different value). Second loading measurement component 140 may also dynamically set and adjust a periodicity of the measurement so as to measure the loading of second power domain 190 periodically. For instance, when system loading of second power domain 190 appears to vary significantly over a given period of time, second loading measurement component 140 may increase the frequency of measurement (or shorten the time between two adjacent measurements). Likewise, when there appears to be little or no variation in the system loading of second power domain 190, second loading measurement component 140 may decrease the frequency of measurement (or lengthen the time between two adjacent measurements). Second loading measurement component 140 may further output data indicative of a result of the measurement and the determined at least one operating parameter of second power domain 190.

Voltage scaling and clock rate control component 110 may be configured to receive the data outputted by each of first loading measurement component 120 and second loading measurement component 140, and may be configured to output control signals to adjust the at least one operating parameter (e.g., voltage and/or clock rate) of each of first power domain 180 and second power domain 190. As an example, voltage and clock rate control component 110 may generate and output a first voltage adjustment signal and a second voltage adjustment signal for adjustment of the voltage of first power domain 180 and the voltage of second power domain 190, respectively. As another example, which may be additional or alternative to the above example, voltage and clock rate control component 110 may generate and output a first clock rate adjustment signal and a second clock rate adjustment signal for adjustment of the clock rate of first power domain 180 and the clock rate of second power domain 190, respectively.

First fast voltage adjustment component 130 may be configured to receive first voltage adjustment signal from voltage and clock rate control component 110, and adjust the voltage of first power domain 180 accordingly. First fast voltage adjustment component 130 may control voltage and clock rate control component 110 and first power domain 180. Second fast voltage adjustment component 150 may be configured to receive second voltage adjustment signal from voltage and clock rate control component 110, and adjust the voltage of second power domain 190 accordingly. Second fast voltage adjustment component 150 may control voltage and clock rate control component 110 and second power domain 190.

PLL component 160 may be configured to provide a source clock signal. PLL component 160 may also receive first clock rate adjustment signal and second clock rate adjustment signal from voltage and clock rate control component 110, and output at least one phase-adjusted source clock signal according to either or both of first clock rate adjustment signal and second clock rate adjustment signal. Dynamic clock management component 170 may be coupled to receive the source clock signal from PLL component 160, and provide various output signals to first power domain 180 and second power domain 190 to adjust the clock rate thereof. For instance, dynamic clock management component 170 may increase, decrease or stop one or more local clock(s) of each power domain by outputting a fast clock signal, a slow clock signal or a stop clock signal, respectively.

Each of first power domain 180 and second power domain 190 (as well as any additional power domain) may be a respective portion of a single integrated circuit (IC) chip which may be a type of complementary metal-oxide-semiconductor (CMOS) chip, e.g., multi-threshold CMOS (MTCMOS). In other words, a single IC chip may include one or more power domains, such as first power domain 180 and second power domain 190, with each power domain operating at respective a loading (e.g., hardware loading, software loading, or a combination thereof) that may be different from the loading (e.g., hardware loading, software loading, or a combination thereof) of each of one or more other power domains. In some implementations, each of first power domain 180 and second power domain 190 (and any additional power domain) may exclude a central processing unit (CPU) of a system or an electronic apparatus. Alternatively, one of first power domain 180 and second power domain 190 (and any additional power domain) may include the CPU of the system or electronic apparatus. In some implementations, every component of control logic 105 may be co-located with the one or more power domains on the same single IC chip. Alternatively, some but not all of the components of control logic 105 may be co-located with the one or more power domains on the same single IC chip.

Each of first power domain 180 and second power domain 190 (as well as any additional power domain) may respectively include one or more circuit sections. In the example shown in FIG. 1, first power domain 180 includes first circuit section 182 and second circuit section 184, and second power domain 190 includes third circuit section 192 and fourth circuit section 194. In other implementations, each power domain may have a different quantity of circuit sections, e.g., greater than or less than 2. Moreover, each circuit section in a given power domain may respectively include one or more functional blocks. In the example shown in FIG. 1, first circuit section 182 includes functional blocks function 1, function 2, ..., function M, second circuit section 184 includes functional blocks function 1, function 2, ..., function N, third circuit section 192 includes functional blocks function 1, function 2, ..., function P, and fourth circuit section 194 includes functional blocks function 1, function 2, ..., function Q, with each of M, N, P and Q being a positive integer equal to or greater than 1.

In various implementations of the present disclosure including example architecture 100, each functional block may be operable in one or more operational states. For example, each functional block may be either enabled (or activated) an in an enabled operational state or disabled (or deactivated) and in a disabled operational state as a result of being triggered by either a respective hardware signal or a respective software signal. In the example shown in FIG. 1, software signals may be provided to each of first power domain 180 and second power domain 190 to enable and disable one or more functional blocks in one or more circuit sections therein. Thus, depending on the respective operational state (e.g., enabled or disabled) of each of the functional blocks in a given circuit section, a loading state of the circuit section at a given time may be one of a number of loading states such as, for example and not limited to, active, active with degraded performance, idle, sleep and stop (or powered down). That is, the loading state of a given circuit section at a given time is a result of the cumulative effect of the operational states of the functional blocks in that circuit section. It is noted the loading states of a circuit section may have different numbers and names and definitions according to different design requirements. In one embodiment, a given circuit section may be in any of the following loading state: active, active with degraded performance, idle, sleep or stop. In another embodiment, a given circuit section may be in the following loading states: full loading, medium loading and light loading. Correspondingly, depending on the respective loading state of each of the circuit sections in a given power domain, the measured loading of the power domain at a given time may be representative of a combination of the respective loading state(s) of the circuit sections in the given power domain. That is, the measured loading of a given power domain at a given time is a result of the cumulative effect of the loading states of the circuit sections in that power domain.

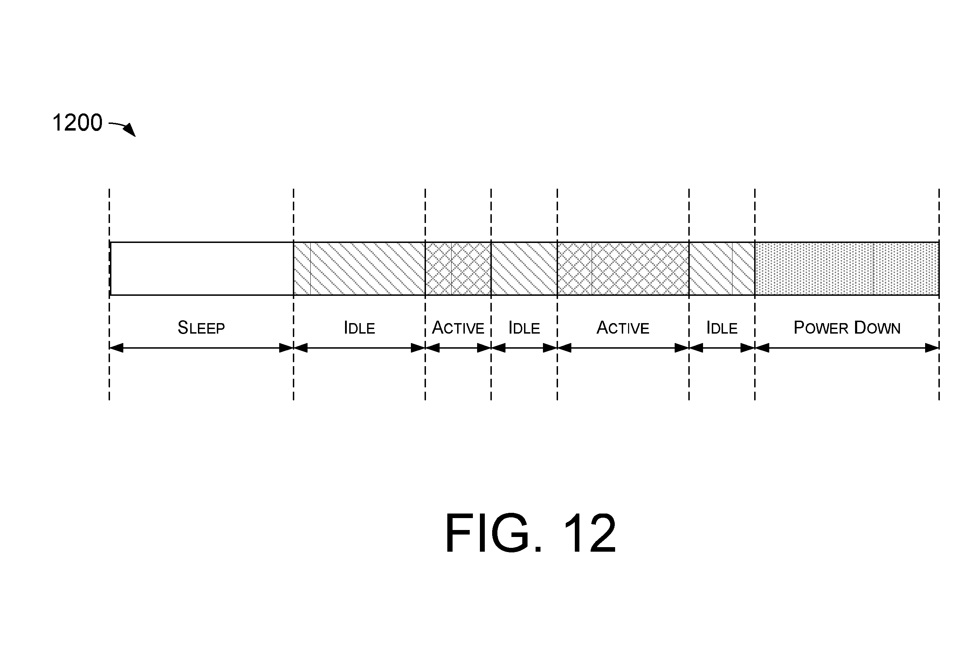

FIG. 12 shows an example 1200 of variation in loading state of a circuit section over time. As shown in FIG. 12, the loading state of a given circuit section may vary from time to time. In the example shown in FIG. 12, the loading state is either "active" or "idle" for the majority of time. However, under conventional approaches, the operating voltage may stay constant or otherwise unchanged. As mentioned above, the loading state of the given circuit section may depend on the respective operational state (e.g., enabled or disabled) of each of the functional blocks in the given circuit section.

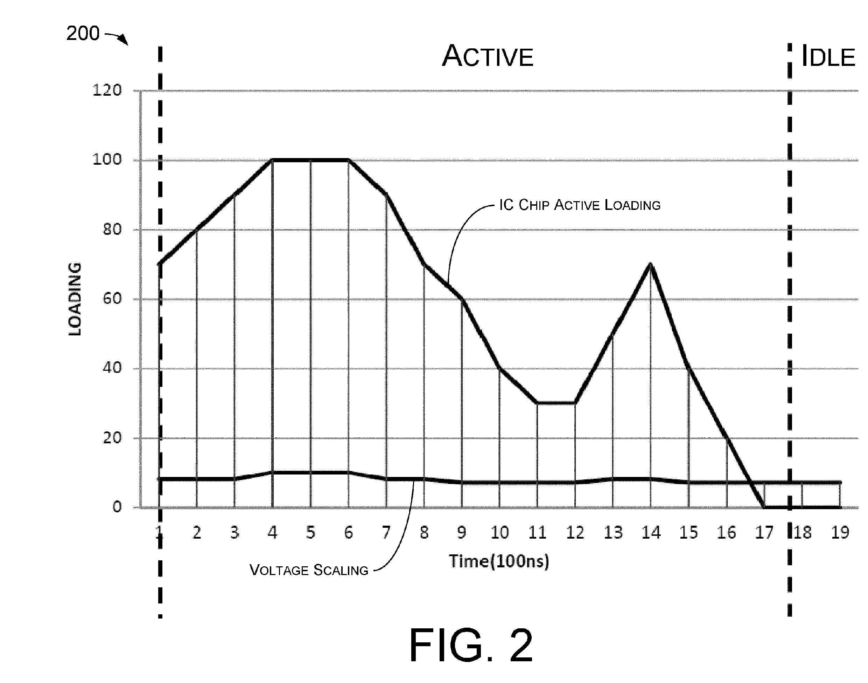

FIG. 2 shows an example chart 200 of example system loading under an example scenario in accordance with an implementation of the present disclosure. Example system loading 200 may be achieved by implementations in accordance with the present disclosure, including example architecture 100. For illustrative purpose, description of FIG. 2 is provided in the context of example architecture 100.

In the example shown in FIG. 2, example system loading may be that of an IC chip during operation. For instance, example system loading may be the active loading of an MTCMOS chip. As shown in FIG. 2, voltage scaling is achieved by implementations of the present disclosure (e.g., example architecture 100) corresponding to variations in example system loading. For instance, when example system loading increases from 70 to 100 and stays high at 100 (from time at 400ns to time at 600ns), voltage scaling by example architecture 100 correspondingly increases the voltage of the MTCMOS chip. Subsequently, when example system loading decreases from 100 to 30 (from time at 600ns to time at 1100ns), voltage scaling by example architecture 100 correspondingly decreases the voltage of the MTCMOS chip.

As discussed in the example of FIG. 1, since a loading of a power domain can be measured according to a combination of respective loading state(s) of circuit sections(s) in the power domain, and voltage and/or clock can be adjusted according to the measured loading, voltage scaling can be performed more quickly and accurately.

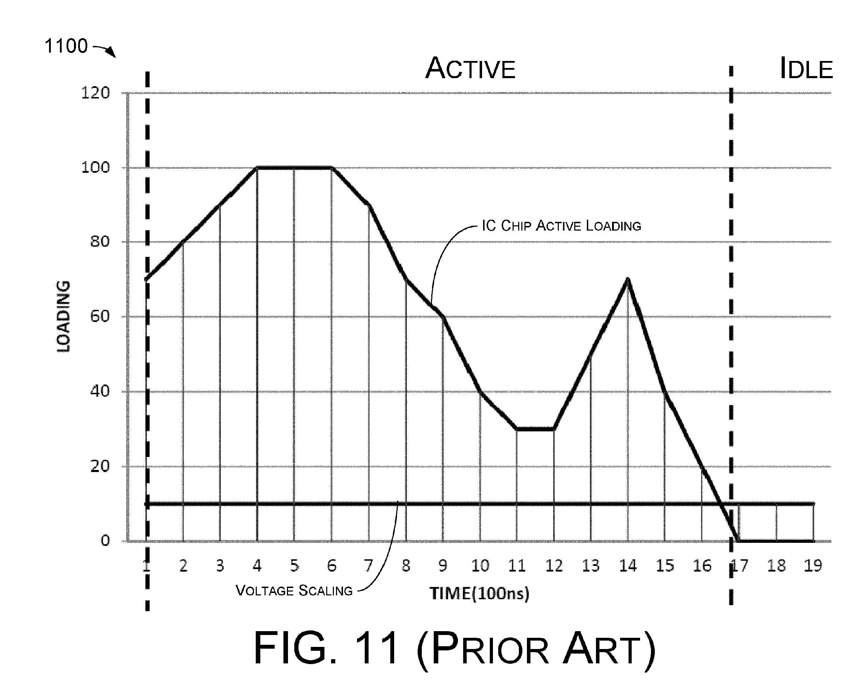

In contrast, as a comparison, FIG. 11 shows an example chart 1100 of example system loading under conventional approaches. As shown in example chart 1100, variations in example system loading may be identical or similar to those shown in example chart 200. That is, a circuit section may have an active loading state and an idle loading state. However, even as example system loading varies over time, the voltage may stay constant under conventional approaches. This may causes undesired power waste.

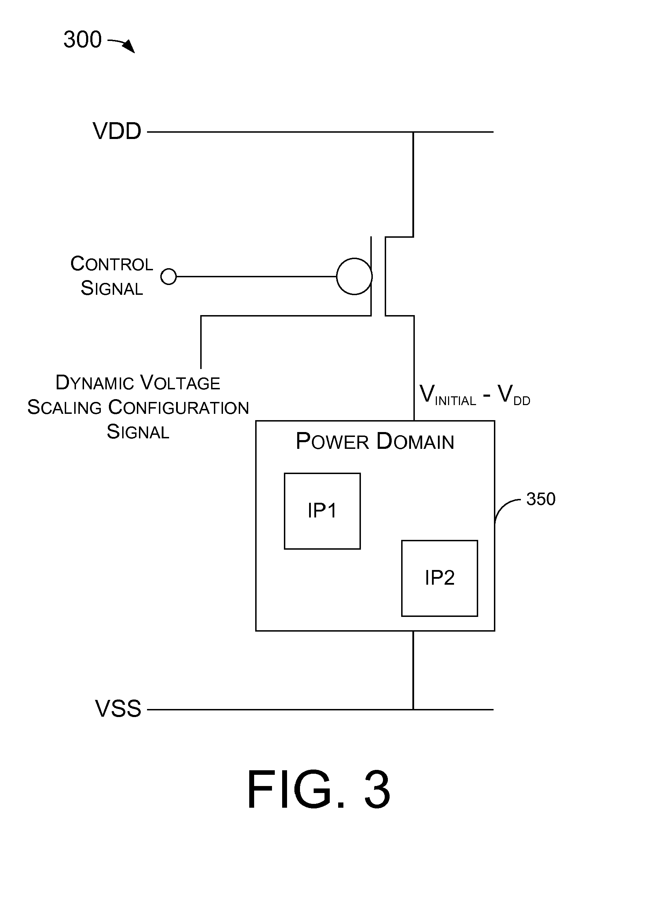

FIG. 3 illustrates an example fast voltage adjustment device 300 in accordance with an implementation of the present disclosure. Example fast voltage adjustment component 300 may be an example implementation of first fast voltage adjustment component 130 and second fast voltage adjustment component 150 of example architecture 100. For illustrative purpose, description of FIG. 3 is provided in the context of example architecture 100.

In the example shown in FIG. 3, example fast voltage adjustment device 300 may be coupled to a power domain 350 and coupled between different voltage sources such as VDD and VSS. Example fast voltage adjustment device 300 may include an on-chip regulator. Additionally or alternatively, example fast voltage adjustment device 300 may include a power switch. The power switch may provide several voltages between VDD and 0 volt such as, for example and not limited to, VDD, 95% of VDD, 90% of VDD and 85% of VDD. Example fast voltage adjustment device 300 may be coupled to receive a control signal, which controls the operation of example fast voltage adjustment device 300. Example fast voltage adjustment device 300 may also receive a signal for dynamic voltage scaling configuration, e.g., first or second voltage adjustment signal from voltage scaling and clock rate control component 110. In some implementations, example fast voltage adjustment device 300 may be able to quickly change the voltage of power domain 350 within a predetermined time period such as 200ns.

Power domain 350 may be an example implementation of any power domain of example architecture 100, including first power domain 180 and second power domain 190. In the example shown in FIG. 3, power domain 350 may include a number of circuit sections such as a first circuit section named IP1 and a second circuit section named IP2.

In one embodiment, a respective clock rate for each circuit section in a given power domain may be determined among a plurality of clock rates corresponding to a plurality of loading states. The determined respective clock may be determined to be the clock rate corresponding to a measured loading state of the circuit section. The plurality of clock rates corresponding to the plurality of loading states may be recorded in a look-up table, which may be in a software form, any storage form, or implemented in hardware circuits. Alternatively or additionally, the plurality of clock rates corresponding to the plurality of loading states may be calculated according to predetermined formulas.

In one embodiment, one or more voltage levels may be determined for the one or more circuit sections respectively according to the determined clock rates for the one or more circuit sections. Each of the voltage levels may be determined to be a voltage level among a plurality of voltages levels corresponding to a plurality of clock rates. The voltage level of a given circuit section may be determined to be the voltage level corresponding to the respective clock rate of the given circuit section. The plurality of voltage levels corresponding to the plurality of clock rates may be recorded in a look-up table, which may be in a software form, any storage form, or implemented in hardware circuits. Alternatively or additionally, the plurality of voltage levels corresponding to the plurality of clock rates may be calculated according to predetermined formulas.

In one embodiment, a respective voltage level provided to a given power domain may then be determined according to the one or more determined voltage levels for one or more circuit sections of the given power domain. For example, the respective voltage level provided to the given power domain may be determined to be a highest voltage level of the one or more determined voltage levels for the one or more circuit sections of the given power domain.

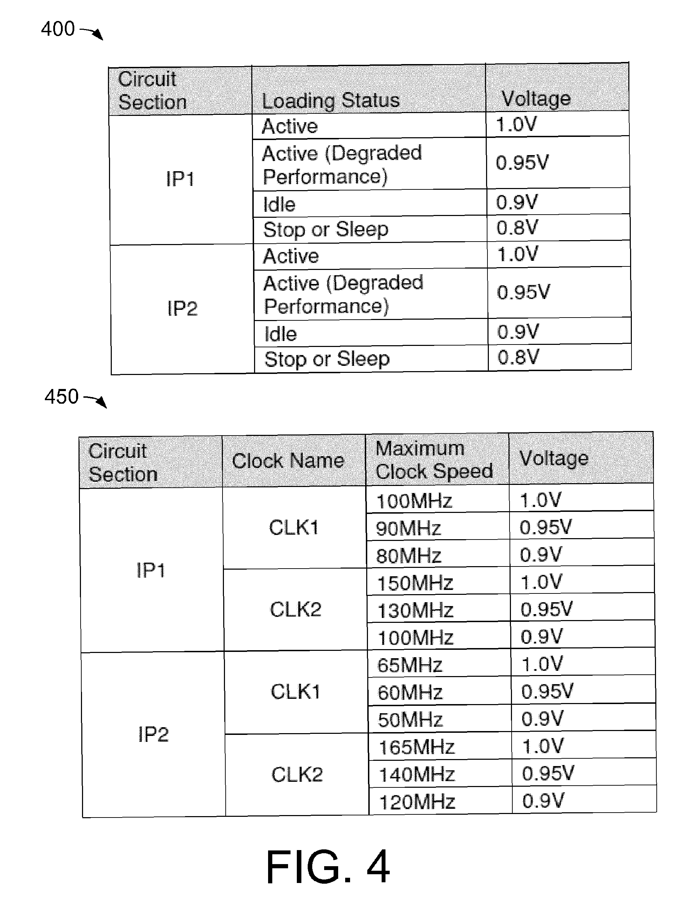

It is noted that, in another embodiment, for each circuit section of one or more circuit sections in a given power domain, a respective voltage level for a given circuit section may be first determined according to a loading state of the given circuit section. Subsequently, a respective voltage level provided to the given power domain may then be determined according to the one or more determined voltage levels for the one or more circuit sections of the given power domain, for example, a highest voltage level thereof. Next, at least one respective clock rate for a given circuit section in the power domain may then be determined, among a plurality of clock rates respectively corresponding to a plurality of voltage levels, to be the at least one clock rate corresponding to the determined voltage level of the power domain or the given circuit section. The details will be explained more with reference to FIG. 4.

FIG. 4 shows an example table 400 of loading states of circuit sections of a power domain and an example table 450 of correlations between clock rates and voltages of circuit sections of a power domain in accordance with an implementation of the present disclosure.

As shown in example table 400, each of first circuit section IP1 and second circuit section IP2 is associated with a number of loading states including, for example and not limited to, active, active with degraded performance, idea and stop or sleep. As described above with respect to example architecture 100, the loading state of a given circuit section may be determined by that circuit section itself in view of the cumulative effect of the operational states of the functional blocks in that circuit section. Also shown in example table 400 is that each loading state of a given circuit section is associated with a corresponding voltage required for the respective circuit section. For instance, for each of first circuit section IP1 and second circuit section IP2, the loading state of "active" may correspond to 1.0V, the loading state of "active with degraded performance" may correspond to 0.95V, the loading state of "idle" may correspond to 0.9V, and the loading state of "stop" or "sleep" may correspond to 0.8V. In various implementations according to the present disclosure, when the voltages required for multiple circuit sections of a given power domain are different, it may be the highest voltage among the different voltages that is chosen to be used as the operating voltage for the power domain.

As shown in example table 450, each of first circuit section IP1 and second circuit section IP2 respectively includes at least two local clocks, namely CLK1 and CLK2. Each of local clocks CLK1 and CLK2 of each of circuit sections IP1 and IP2 may operate at one of a number of different clock rates (or frequencies) at a given time. For instance, local clock CLK1 of first circuit section IP1 may operate at 100MHz, 90MHz or 80MHz, local clock CLK2 of first circuit section IP1 may operate at 150MHz, 130MHz or 100MHz, local clock CLK1 of second circuit section IP2 may operate at 65MHz, 60MHz or 50MHz, and local clock CLK2 of second circuit section IP2 may operate at 165MHz, 140MHz or 120MHz.

Moreover, each local clock rate may correspond to a respective operating voltage for the respective circuit section, e.g., as determined by design requirements such as an application-specific integrated circuit (ASIC) static timing analysis tool. For instance, for local clock CLK1 of circuit section IP1, clock rate 100MHz may correspond to a voltage of 1.0V, clock rate 90MHz may correspond to a voltage of 0.95V, and clock rate 80MHz may correspond to a voltage of 0.9V. For local clock CLK2 of circuit section IP1, clock rate 150MHz may correspond to a voltage of 1.0V, clock rate 130MHz may correspond to a voltage of 0.95V, and clock rate 100MHz may correspond to a voltage of 0.9V. For local clock CLK1 of circuit section IP2, clock rate 65MHz may correspond to a voltage of 1.0V, clock rate 60MHz may correspond to a voltage of 0.95V, and clock rate 50MHz may correspond to a voltage of 0.9V. For local clock CLK2 of circuit section IP2, clock rate 165MHz may correspond to a voltage of 1.0V, clock rate 140MHz may correspond to a voltage of 0.95V, and clock rate 120MHz may correspond to a voltage of 0.9V. In some implementations, the correlation between clock rates and corresponding voltages may be recorded in a look-up table which may be stored in memory.

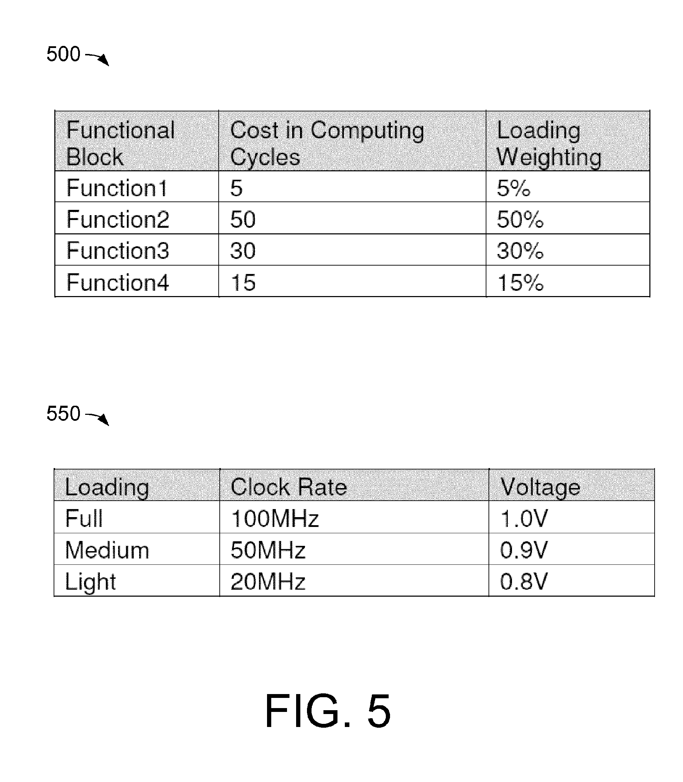

FIG. 5 shows an example table 500 of weighting coefficients of functional blocks of a power domain and an example table 550 of clock rates and voltages corresponding to various system loadings in accordance with an implementation of the present disclosure.

As described above with respect to example architecture 100, each circuit section of a given power domain may include one or more functional blocks. Each functional block of a given circuit section may be associated with a respective weighting coefficient that can be proportional to a percentage of loading on the circuit section attributable to the respective functional block. That is, the greater the percentage of the loading of a circuit section is attributable to a given functional block, the greater the weighting coefficient can be assigned to that functional block. Thus, as different functional blocks of a given circuit section are enabled and disabled at various times, the resultant loading of the circuit section may change over time. Moreover, each functional block may be enabled and disabled by a software signal (static) and/or by a hardware signal (dynamic). For instance, one or more physical interface (e.g., pads or metal bonding) may be utilized to transmit hardware signals to enable and disable the functional blocks of each circuit section of a power domain. Additionally or alternatively, an enable command or a disable command may be included in a packet header of a packet sent to a given circuit section to enable or disable one or more functional blocks therein.

As shown in example table 500, the weighting coefficients may be determined at least based on computing cycles/computing capability of the functional block. In other words, a loading state of a given circuit section may be related to a combination of respective computing cycles (represented by respective weighting coefficients) and respective operational states of one of more functional blocks in the given circuit section. As exemplarily illustrated, the required number of clock cycles, or cost, for computation by all four functional blocks is 100 cycles. Given that functional block funcion1 requires 5 of the 100 cycles, the corresponding weighting coefficient is 5%. Given that functional block function2 requires 50 of the 100 cycles, the corresponding weighting coefficient is 50%. Given that functional block funcion3 requires 30 of the 100 cycles, the corresponding weighting coefficient is 30%. Given that functional block funcion4 requires 15 of the 100 cycles, the corresponding weighting coefficient is 15%.

In various implementations according to the present disclosure, each circuit section may need or be allowed a fixed amount of time, e.g., 1000ns, to perform computation. As shown in example table 500, each of functional blocks, namely function1, function2, function3 and function4, requires a respective number of clock cycles for computation. For instance, functional block function1 may require 5 clock cycles to perform computation during the fixed amount of time of 1000ns, functional block fucntion2 may require 50 clock cycles to perform computation during the fixed amount of time of 1000ns, functional block fucntion3 may require 30 clock cycles to perform computation during the fixed amount of time of 1000ns, and functional block fucntion4 may require 15 clock cycles to perform computation during the fixed amount of time of 1000ns. Accordingly, when all four functional blocks are enabled, the cost for computation would be 100 cycles (= 5 + 50 + 30 + 15 cycles), and the clock rate for the circuit section would be 100MHz (= 100 cycles / 1000ns). For illustrative purpose and as an example, if functional block function2 is disabled, the circuit section may slow down the clock rate to 50MHz. This is because the cost for computation would be 50 cycles (= 5 + 30 + 15 cycles) due to the remaining three enabled functional blocks, which results in 50MHz (= 50 cycles / 1000ns) as the adjusted clock rate.

As described above, the loading state of a given circuit section at a given time is a result of the cumulative effect of the loading states of the functional blocks in that circuit section, and the loading state of a circuit section may be categorized as, for example, full loading, medium loading and light loading. As shown in example table 550, each loading state of a circuit section may be associated with a corresponding clock rate as well as a corresponding voltage for the circuit section. For instance, when the circuit section is considered being under full loading, the corresponding clock rate may be 100MHz and the corresponding voltage may be 1.0V. When the circuit section is considered being under medium loading, the corresponding clock rate may be 50MHz and the corresponding voltage may be 0.9V. When the circuit section is considered being under light loading, the corresponding clock rate may be 20MHz and the corresponding voltage may be 0.8V. In some implementations, the correlation between clock rates and corresponding voltages may be recorded in a look-up table which may be stored in memory.

In summary, after a clock rare of each circuit section in a power domain is determined according to the table 550, a corresponding voltage level may be determined also according to the table 550. The determined corresponding voltage may be a possible or minimum voltage level for the circuit section. Consequently, a voltage level provided to the power domain may be determined based on the respective determined voltage levels of the circuit sections in the power domain, e.g., the highest voltage levels thereof. The determined voltage level, which can be the same or different from the voltage level corresponding to the respective clock rate of each circuit section, may be the voltage level actually provided to each circuit section in the power domain.

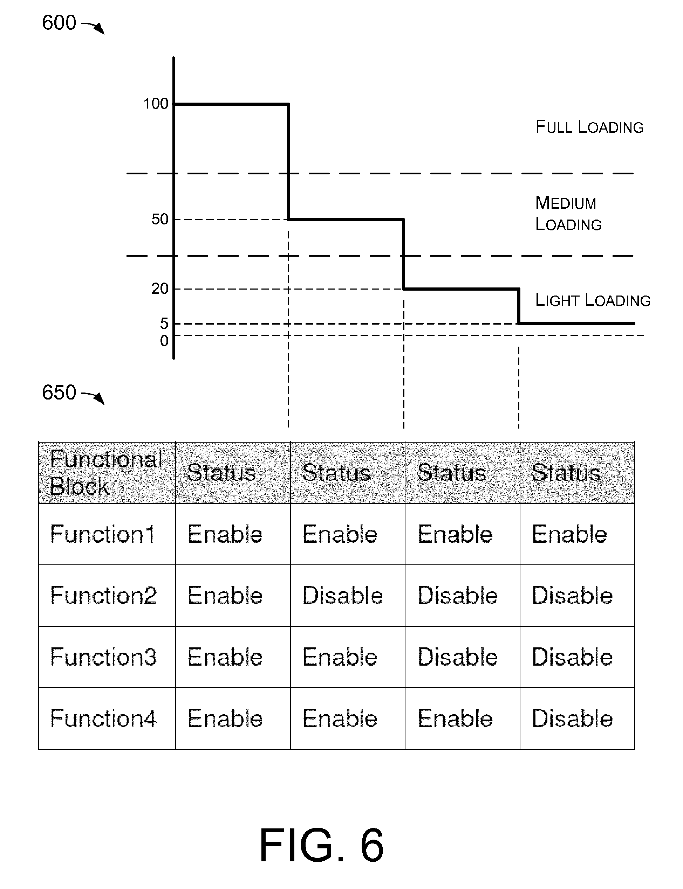

FIG. 6 shows an example chart 600 of example system loading corresponding to example operational states of functional blocks of a circuit section in accordance with an implementation of the present disclosure. As shown in FIG. 6, the chart 600 of example system loading corresponds to an example table 650 of operational states of functional blocks function1, fuction2, function3 and function4. Referring to both example table 500 and example chart 600, as shown in example table 650, when all four functional blocks are enabled, the cost for computation is 100 cycles. When function2 is disabled while function1, function3 and function4 are enabled, the cost for computation is 50 cycles. When function2 and fucntion3 are disabled while function1 and function4 are enabled, the cost for computation is 20 cycles. When function2, function3 and function4 are disabled while function1 is enabled, the cost for computation is 5 cycles.

In various implementations according to the present disclosure, the categorization of the loading of a circuit section may be done by dividing the cost into several ranges. As shown in example chart 600, the loading is considered full loading when the cost for computation is above 70 cycles, the loading is considered medium loading when the cost for computation is between 35 and 70 cycles, and the loading is considered light loading when the cost for computation is below 35 cycles. Accordingly, the number of ranges for categorizing the loading for a circuit section may be proportional to the granularity of voltage scaling and clock rate adjustment. That is, the more ranges there are for categorizing the loading, the more fine-grained voltage scaling and clock rate adjustment there may be.

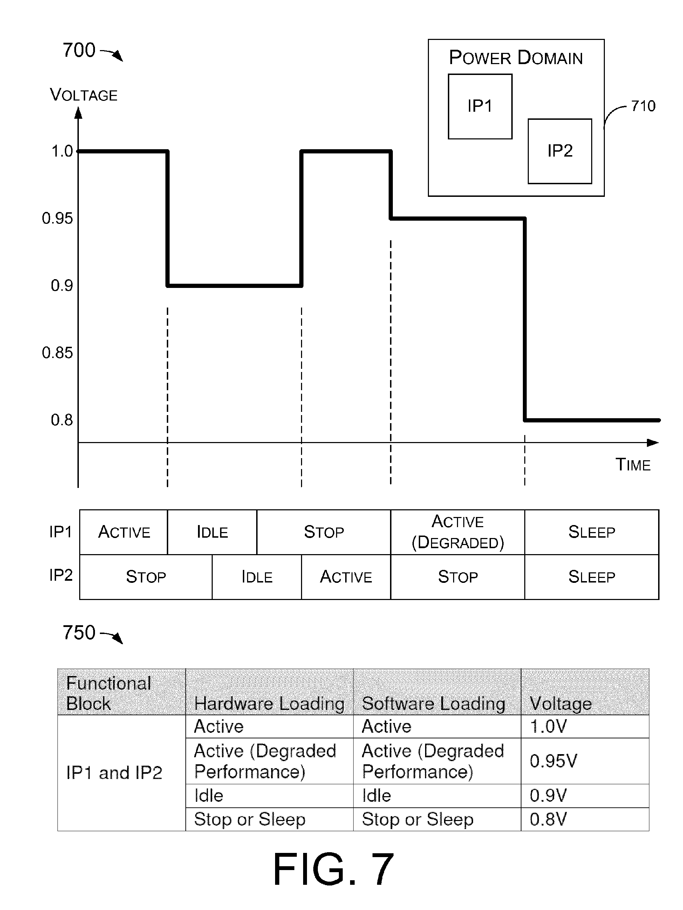

FIG. 7 shows an example chart 700 of example voltage scaling for a power domain 710 in accordance with an implementation of the present disclosure. In the example shown in FIG. 7, power domain 710 includes two circuit sections, namely IP1 and IP2. As shown in example table 750, each of circuit sections IP1 and IP2 can dynamically operate in any of a number of loading states (e.g., active, active with degraded performance, idle and stop or sleep). In addition, each loading state is associated with a corresponding voltage level in the embodiment. The corresponding voltage level, may correspond to a clock rate (according to a look-up table for example), which may correspond to the loading state (according to the same or different lookup table for example). For instance, loading state of "active" may correspond to 1.0V, loading state of "active with degraded performance" may correspond to 0.95V, loading state of "idle" may correspond to 0.9V, and loading state of "stop" or "sleep" may correspond to 0.8V.

Each of circuit sections IP1 and IP2 may be in a respective loading state at a given time. Thus, at any given time each of circuit sections IP1 and IP2 may require different voltages. As described above, when different circuit sections of a given power domain require different voltages at a given time, the highest voltage of the different voltages may be chosen as the operating voltage for that power domain. Accordingly, as shown in example chart 700, when circuit section IP1 is in the "active" loading state (and hence requiring 1.0V) and circuit section IP2 is in the "stop" loading state (and hence requiring 0.8V), the chosen operating voltage for power domain 710 can be 1.0V. When circuit section IP1 is in the "idle" loading state (and hence requiring 0.9V) and circuit section IP2 is in the "idle" loading state (and hence requiring 0.9V), the chosen operating voltage for power domain 710 is 0.9V. When circuit section IP1 is in the "stop" loading state (and hence requiring 0.8V) and circuit section IP2 is in the "idle" loading state (and hence requiring 0.9V), the chosen operating voltage for power domain 710 is 0.9V. When circuit section IP1 is in the "stop" loading state (and hence requiring 0.8V) and circuit section IP2 is in the "active" loading state (and hence requiring 1.0V), the chosen operating voltage for power domain 710 is 1.0V. When circuit section IP1 is in the "active with degraded performance" loading state (and hence requiring 0.95V) and circuit section IP2 is in the "stop" loading state (and hence requiring 0.8V), the chosen operating voltage for power domain 710 is 0.95V. When circuit section IP1 is in the "sleep" loading state (and hence requiring 0.8V) and circuit section IP2 is in the "sleep" loading state (and hence requiring 0.8V), the chosen operating voltage for power domain 710 is 0.8V.

### Example Implementations

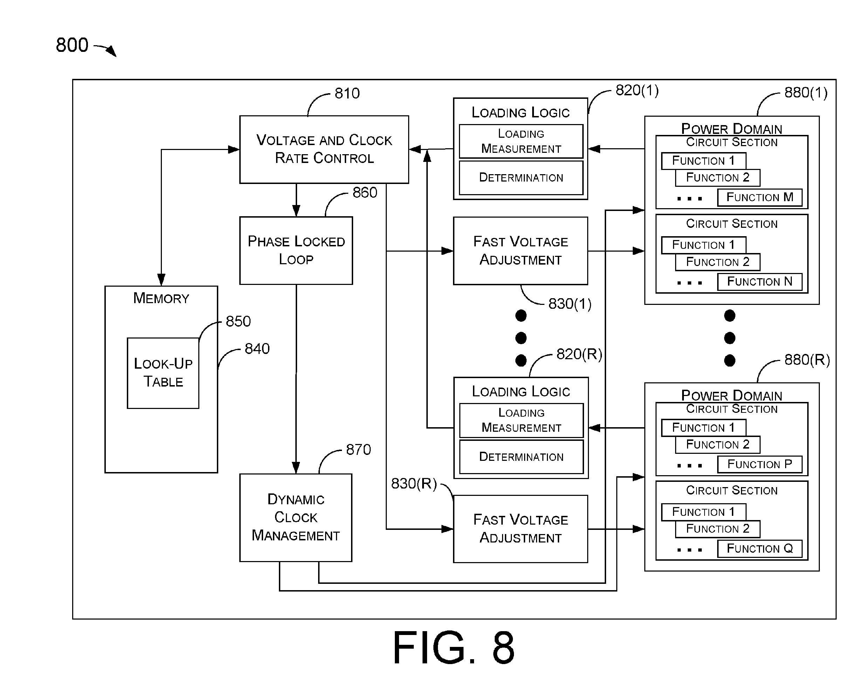

FIG. 8 is a block diagram of an example apparatus 800 in accordance with another implementation of the present disclosure. Example apparatus 800 may perform various functions related to techniques, methods and systems described herein, including example processes 900 and 1000 described below. Example apparatus 800 may be an illustrative implementation of example architecture 100.

Example apparatus 800 may include a number of hardware components. Each hardware component may be form of one or more electronic circuits each respectively including physical elements such as one or more transistors, one or more capacitors, one or more resistors, one or more inductors and/or one or more memristors. Moreover, one or more of the hardware components of example apparatus 800 may be configured to execute one or more sets of instructions stored in the form of one or more firmware modules, one or more middleware modules and/or one or more software modules. In some implementations, the one or more firmware modules, one or more middleware modules and/or one or more software modules may be embedded or otherwise stored in one or more of the hardware components of example apparatus 800. Additionally or alternatively, the one or more firmware modules, one or more middleware modules and/or one or more software modules may be stored in one or more external memory or data storage devices.

Example apparatus 800 may be an electronic apparatus. In some implementations, example apparatus 800 may be a portable electronics apparatus such as, for example, a smartphone, a tablet computer, a laptop computer, a notebook computer, a wearable device and the like. Alternatively, example apparatus 800 may be a single IC chip or a chipset including one or more discrete IC chips.

Example apparatus 800 may include at least those components shown in FIG. 8, such as a voltage and clock rate control circuit 810, a memory circuit 840, a PLL circuit 860, a dynamic clock management circuit 870, one or more loading logics 820(1) - 820(R), one or more fast voltage adjustment circuit 830(1) - 830(R), and one or more power domains 880(1) - 880(R), with R being a positive integer greater than or equal to 1. Although voltage and clock rate control circuit 810, memory circuit 840, PLL circuit 860, dynamic clock management circuit 870, one or more loading logics 820(1) - 820(R), one or more fast voltage adjustment circuit 830(1) - 830(R), and one or more power domains 880(1) - 880(R) are illustrated as discrete components separate from each other, in various implementations of example apparatus 800 at least some of these components may be integral parts of a single IC chip or chipset.

Voltage and clock rate control circuit 810 may be an implementation of voltage and clock rate control component 110 of example architecture 100. Each of loading logic 820(1) - 820(R) may be an implementation of loading measurement component 120 or 140 of example architecture 100. Each of fast voltage adjustment circuits 830(1) - 830(R) may be an implementation of fast voltage adjustment component 130 or 150 of example architecture 100. PLL circuit 860 may be an implementation of PLL component 160 of example architecture 100. Dynamic clock management circuit 870 may be an implementation of dynamic clock management component 170 of example architecture 100. Each of power domains 880(1) - 880(R) may be an implementation of power domain 180 or 190 of example architecture 100. Accordingly, features and aspects described above with respect to various components of example architecture 100 are applicable to aforementioned components of example apparatus 800 and, therefore, in the interest of brevity detailed description of aforementioned components of example apparatus 800 is not repeated herein.

Memory circuit 840 may be coupled to voltage and clock rate control circuit 810. Memory circuit 840 may be configured to store therein one or more look-up tables, shown as look-up table 850 in FIG. 8. Look-up table 850 may be configured to record the correlation between clock rates and corresponding voltages for each circuit section of each of power domains 880(1) - 880(R).

Each of loading logics 820(1) - 820(R) may respectively include a loading measurement circuit and a determination circuit. The loading measurement circuit may be coupled to a respective power domain. For instance, the loading measurement circuit of loading logic 820(1) is coupled to power domain 880(1) and the loading measurement circuit of loading logic 820(R) is coupled to power domain 880(R). The loading measurement circuit of each of loading logics 820(1) - 820(R) may be configured to measure a loading of the respective power domain by determining a respective loading state of each of the one or more circuit sections of the respective power domain. The measured loading of the respective power domain may be representative of a combination of the one or more loading states of the one or more circuit sections of the respective power domain.

The determination circuit may be coupled to the respective loading measurement circuit. For instance, the determination circuit of loading logic 820(1) is coupled to the loading measurement circuit of loading logic 820(1), and the determination circuit of loading logic 820(R) is coupled to the loading measurement circuit of loading logic 820(R). The determination circuit of each of loading logics 820(1) - 820(R) may be configured to determine at least one operating parameter of the respective power domain according to the measured loading of the respective power domain.

As described above with respect to example architecture 100, in example apparatus 800, each of the one or more circuit sections of the respective power domain may respectively include one or more functional blocks each of which operating in one of a plurality of operational states at a time of the measuring. Additionally, the loading state of each of the one or more circuit sections of the respective power domain may be based on a combination of one or more operational states of the one or more functional blocks of the respective circuit section at the time of the measuring.

In some implementations, the determination circuit of each of loading logics 820(1) - 820(R) may be further configured to determine the loading state of each of the one or more circuit sections of the respective power domain according to the one or more operational states of the one or more functional blocks of the respective circuit section and one or more weighting coefficients associated with the one or more functional blocks of the respective circuit section.

In some implementations, the at least one operating parameter of the respective power domain may include one or more respective clock rates for the one or more circuit sections of the respective power domain.

In some implementations, in determining the at least one operating parameter of the respective power domain according to the measured loading of the respective power domain, the determination circuit of each of loading logics 820(1) - 820(R) may be configured to determine the respective clock rate for each of the one or more circuit sections of the respective power domain to be a clock rate among a plurality of clock rates corresponding to a respective loading state of a plurality of loading states. The plurality of clock rates may respectively correspond to the plurality of loading states.

In some implementations, in determining the at least one operating parameter of the respective power domain according to the measured loading of the respective power domain, the determination circuit of each of loading logics 820(1) - 820(R) may be further configured to refer look-up table 850 which records the plurality of clock rates respectively corresponding to the plurality of loading states.

In some implementations, the at least one operating parameter of the respective power domain may include a voltage level provided to the respective power domain.

In some implementations, in determining the at least one operating parameter of the respective power domain according to the measured loading of the respective power domain, the determination circuit of each of loading logics 820(1) - 820(R) may be configured to perform a number of operations. For instance, the determination circuit may determine one or more voltage levels for the one or more circuit sections, each of the voltage levels corresponding to the respective clock rate of a respective one of the one or more circuit sections. Moreover, the determination circuit may determine the voltage level provided to the respective power domain according to the one or more voltage levels for the one or more circuit sections.

In some implementations, in determining the one or more voltage levels for the one or more circuit sections, the determination circuit of each of loading logics 820(1) - 820(R) may be configured to determine the respective voltage level for each of the one or more circuit sections of the respective power domain to be a voltage level among a plurality of voltage levels corresponding to a respective clock rate of a plurality of clock rates. The plurality of voltage levels may respectively correspond to the plurality of clock rates.

In some implementations, in determining the one or more voltage levels for the one or more circuit sections, the determination circuit of each of loading logics 820(1) - 820(R) may be further configured to refer look-up table 850 which records the plurality of voltage levels respectively corresponding to the plurality of voltage levels for the respective power domain.

In some implementations, in determining the voltage level provided to the respective power domain according to the one or more voltage levels for the one or more circuit sections, the determination circuit of each of loading logics 820(1) - 820(R) may be configured to identify a highest voltage level among the determined one or more voltage levels for the one or more circuit sections as the voltage level provided to the respective power domain.

In some implementations, the one or more power domains 880(1) - 880(R) may be powered by one or more power sources. For instance, one of the one or more power domains 880(1) - 880(R) may be powered by a first power source while another of the one or more power domains 880(1) - 880(R) may be powered by a second power source different from the power source.

In some implementations, when there are multiple more power domains 880(1) - 880(R), two or more of the power domains 880(1) - 880(R) may be integral parts of a single IC chip.

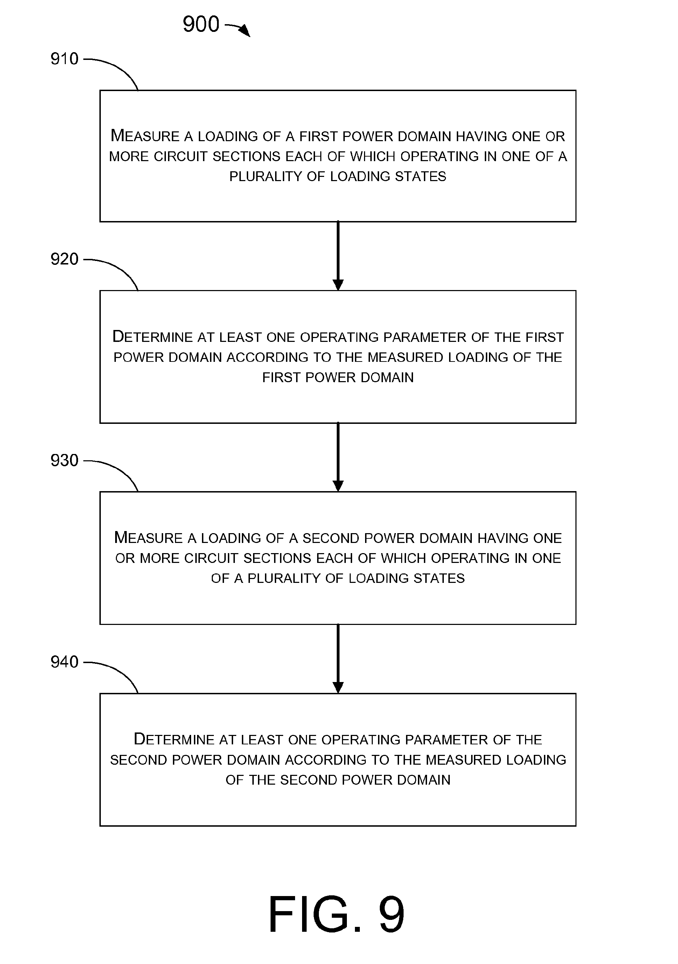

FIG. 9 is a flowchart of an example process 900 in accordance with an implementation of the present disclosure. Example process 900 may include one or more operations, actions, or functions as represented by one or more of blocks 910, 920, 930 and 940. Although illustrated as discrete blocks, various blocks may be divided into additional blocks, combined into fewer blocks, or eliminated, depending on the desired implementation. Example process 900 may be implemented by example architecture 100 as well as one or more components of example apparatus 800. For illustrative purposes, operations of example process 900 are described below in the context of being performed by example apparatus 800. Example process 900 may begin at block 910.

At 910, example process 900 may involve example apparatus 800 measuring a loading of a first power domain. The first power domain may include one or more circuit sections each of which operating in one of a plurality of loading states. In some implementations, in measuring the loading of the first power domain, example process 900 may involve example apparatus 800 determining a respective loading state of each of the one or more circuit sections of the first power domain. The measured loading of the first power domain may be representative of a combination of the one or more loading states of the one or more circuit sections. Block 910 may be followed by block 920.

At 920, example process 900 may involve example apparatus 800 determining at least one operating parameter of the first power domain according to the measured loading of the first power domain. Block 920 may be followed by block 930.

At 930, example process 900 may involve example apparatus 800 measuring a loading of a second power domain different from the first power domain. The second power domain may include one or more circuit sections each of which operating in one of a plurality of loading states. In some implementations, in measuring the loading of the second power domain, example process 900 may involve example apparatus 800 determining a respective loading state of each of the one or more circuit sections of the second power domain. The measured loading of the second power domain may be representative of a combination of the one or more loading states of the one or more circuit sections. Block 930 may be followed by block 940.

At 940, example process 900 may involve example apparatus 800 determining at least one operating parameter of the second power domain according to the measured loading of the second power domain.

In some implementations, each of the one or more circuit sections of the first power domain may respectively include one or more functional blocks each of which operating in one of a plurality of operational states at a time of the measuring. The loading state of each of the one or more circuit sections of the first power domain may be based on a combination of one or more operational states of the one or more functional blocks of the respective circuit section at the time of the measuring. In some implementations, example process 900 may further involve example apparatus 800 determining the loading state of each of the one or more circuit sections of the first power domain according to the one or more operational states of the one or more functional blocks of the respective circuit section and one or more weighting coefficients associated with the one or more functional blocks of the respective circuit section.

In some implementations, the at least one operating parameter of the first power domain may include one or more respective clock rates for the one or more circuit sections of the first power domain. In some implementations, in determining the at least one operating parameter of the first power domain according to the measured loading of the first power domain, example process 900 may involve example apparatus 800 determining the respective clock rate for each of the one or more circuit sections of the first power domain to be a clock rate among a plurality of clock rates corresponding to a respective loading state of a plurality of loading states. The plurality of clock rates may respectively correspond to the plurality of loading states. Additionally or alternatively, in determining the at least one operating parameter of the first power domain according to the measured loading of the first power domain, example process 900 may involve example apparatus 800 referring a look-up table which records the plurality of clock rates respectively corresponding to the plurality of loading states.

In some implementations, the at least one operating parameter of the first power domain may include a voltage level provided to the first power domain. In some implementations, in determining the at least one operating parameter of the first power domain according to the measured loading of the first power domain, example process 900 may involve example apparatus 800 determining one or more voltage levels for the one or more circuit sections, each of the voltage levels corresponding to the respective clock rate of a respective one of the one or more circuit sections. Moreover, example process 900 may also involve example apparatus 800 determining the voltage level provided to the first power domain according to the one or more voltage levels for the one or more circuit sections. In some implementations, in determining the one or more voltage levels for the one or more circuit sections, example process 900 may involve example apparatus 800 determining the respective voltage level for each of the one or more circuit sections of the first power domain to be a voltage level among a plurality of voltage levels corresponding to a respective clock rate of a plurality of clock rates. The plurality of voltage levels may respectively correspond to the plurality of clock rates. Additionally or alternatively, in determining the one or more voltage levels for the one or more circuit sections, example process 900 may involve example apparatus 800 referring a look-up table which records the plurality of voltage levels respectively corresponding to the plurality of voltage levels for the first power domain.

Alternatively, in determining the voltage level provided to the first power domain according to the one or more voltage levels for the one or more circuit sections, example process 900 may involve example apparatus 800 identifying a highest voltage level among the determined one or more voltage levels for the one or more circuit sections as the voltage level provided to the first power domain.

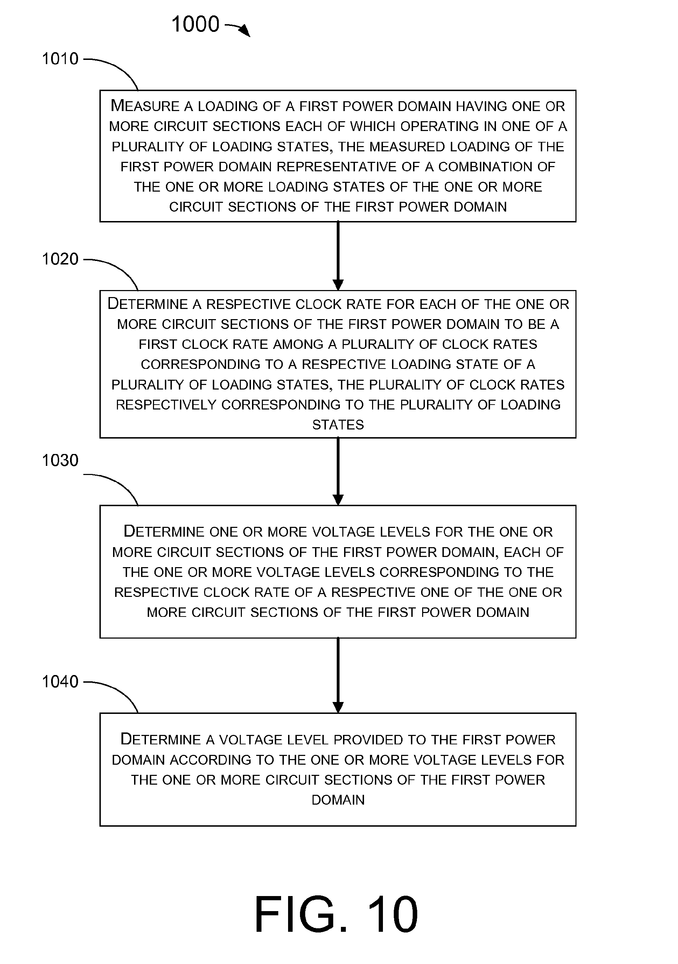

FIG. 10 is a flowchart of an example process 1000 in accordance with another implementation of the present disclosure. Example process 1000 may include one or more operations, actions, or functions as represented by one or more of blocks 1010, 1020 and 1030. Although illustrated as discrete blocks, various blocks may be divided into additional blocks, combined into fewer blocks, or eliminated, depending on the desired implementation. Example process 1000 may be implemented by example architecture 100 as well as one or more components of example apparatus 800. For illustrative purposes, operations of example process 1000 are described below in the context of being performed by example apparatus 800. Example process 1000 may begin at block 1010.

At 1010, example process 1000 may involve example apparatus 800 measuring a loading of a first power domain. The first power domain may include one or more circuit sections each of which operating in one of a plurality of loading states. The measured loading of the first power domain may be representative of a combination of the one or more loading states of the one or more circuit sections of the first power domain. Block 1010 may be followed by block 1020.

At 1020, example process 1000 may involve example apparatus 800 determining a respective clock rate for each of the one or more circuit sections of the first power domain to be a first clock rate among a plurality of clock rates corresponding to a respective loading state of a plurality of loading states. The plurality of clock rates may respectively correspond to the plurality of loading states. Additionally or alternatively, example process 1000 may involve example apparatus 800 referring a look-up table which records the plurality of clock rates respectively corresponding to the plurality of loading states. Block 1020 may be followed by block 1030.

At 1030, example process 1000 may involve example apparatus 800 determining one or more voltage levels for the one or more circuit sections of the first power domain. Each of the one or more voltage levels may correspond to the respective clock rate of a respective one of the one or more circuit sections of the first power domain. Block 1030 may be followed by block 1040.

At 1040, example process 1000 may involve example apparatus 800 determining a voltage level provided to the first power domain according to the one or more voltage levels for the one or more circuit sections of the first power domain.

In some implementations, in determining the one or more voltage levels for the one or more circuit sections, example process 1000 may involve example apparatus 800 determining the respective voltage level for each of the one or more circuit sections of the first power domain to be a voltage level among a plurality of voltage levels corresponding to a respective clock rate of the plurality of clock rates. The plurality of voltage levels respectively may correspond to the plurality of clock rates. Additionally or alternatively, in determining the one or more voltage levels for the one or more circuit sections, example process 1000 may involve example apparatus 800 referring a look-up table which records the plurality of voltage levels respectively corresponding to the plurality of voltage levels for the first power domain.

In some implementations, in determining the voltage level provided to the first power domain according to the one or more voltage levels of the one or more circuit sections, example process 1000 may involve example apparatus 800 identifying a highest voltage level among the determined one or more voltage levels for the one or more circuit sections as the voltage level provided to the first power domain.

In some implementations, example process 1000 may further involve example apparatus 800 measuring a loading of a second power domain. The second power domain may include one or more circuit sections each of which operating in one of a plurality of loading states. The measured loading of the second power domain may be representative of a combination of the one or more loading states of the one or more circuit sections of the second power domain. Additionally, example process 1000 may involve example apparatus 800 determining a respective clock rate for each of the one or more circuit sections of the second power domain to be a second clock rate among the plurality of clock rates corresponding to a respective loading state of the plurality of loading states. Moreover, example process 1000 may involve example apparatus 800 determining one or more voltage levels for the one or more circuit sections of the second power domain. Each of the one or more voltage levels may correspond to the respective clock rate of a respective one of the one or more circuit sections of the second power domain. Furthermore, example process 1000 may involve example apparatus 800 determining a voltage level provided to the second power domain according to the one or more voltage levels for the one or more circuit sections of the second power domain.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., " a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., " a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

The present invention may also be defined by means of the following numbered clauses:

### Clauses:

1. A method, comprising:
   measuring a loading of a first power domain, the first power domain comprising one or more circuit sections each of which operating in one of a plurality of loading states, wherein the measuring of the loading of the first power domain comprises determining a respective loading state of each of the one or more circuit sections of the first power domain, the measured loading of the first power domain representative of a combination of the one or more loading states of the one or more circuit sections; and
   determining at least one operating parameter of the first power domain according to the measured loading of the first power domain.
2. The method of clause 1, wherein each of the one or more circuit sections of the first power domain respectively comprises one or more functional blocks each of which operating in one of a plurality of operational states at a time of the measuring, and wherein the loading state of each of the one or more circuit sections of the first power domain is based on a combination of one or more operational states of the one or more functional blocks of the respective circuit section at the time of the measuring.
3. The method of clause 2, further comprising determining the loading state of each of the one or more circuit sections of the first power domain according to the one or more operational states of the one or more functional blocks of the respective circuit section and one or more weighting coefficients associated with the one or more functional blocks of the respective circuit section.
4. The method of clause 1, wherein the at least one operating parameter of the first power domain comprises one or more respective clock rates for the one or more circuit sections of the first power domain.
5. The method of clause 4, wherein the determining of the at least one operating parameter of the first power domain according to the measured loading of the first power domain comprises determining the respective clock rate for each of the one or more circuit sections of the first power domain to be a clock rate among a plurality of clock rates corresponding to a respective loading state of a plurality of loading states, the plurality of clock rates respectively corresponding to the plurality of loading states.
6. The method of clause 5, wherein the determining of the at least one operating parameter of the first power domain according to the measured loading of the first power domain further comprises referring a look-up table which records the plurality of clock rates respectively corresponding to the plurality of loading states.
7. The method of clause 1, wherein the at least one operating parameter of the first power domain comprises a voltage level provided to the first power domain.
8. The method of clause 7, wherein the determining of the at least one operating parameter of the first power domain according to the measured loading of the first power domain comprises:
   determining one or more voltage levels for the one or more circuit sections, each of the voltage levels corresponding to the respective clock rate of a respective one of the one or more circuit sections; and
   determining the voltage level provided to the first power domain according to the one or more voltage levels for the one or more circuit sections.
9. The method of clause 8, wherein the determining of the one or more voltage levels for the one or more circuit sections comprises determining the respective voltage level for each of the one or more circuit sections of the first power domain to be a voltage level among a plurality of voltage levels corresponding to a respective clock rate of a plurality of clock rates, the plurality of voltage levels respectively corresponding to the plurality of clock rates.
10. The method of clause 9, wherein the determining of the one or more voltage levels for the one or more circuit sections further comprises referring a look-up table which records the plurality of voltage levels respectively corresponding to the plurality of voltage levels for the first power domain.
11. The method of clause 8, wherein the determining of the voltage level provided to the first power domain according to the one or more voltage levels for the one or more circuit sections comprises identifying a highest voltage level among the determined one or more voltage levels for the one or more circuit sections as the voltage level provided to the first power domain.
12. The method of clause 1, further comprising:
   measuring a loading of a second power domain different from the first power domain, the second power domain comprising one or more circuit sections each of which operating in one of a plurality of loading states, wherein the measuring of the loading of the second power domain comprises determining a respective loading state of each of the one or more circuit sections of the second power domain, the measured loading of the second power domain representative of a combination of the one or more loading states of the one or more circuit sections; and
   determining at least one operating parameter of the second power domain according to the measured loading of the second power domain.
13. A method, comprising:
   measuring a loading of a first power domain, the first power domain comprising one or more circuit sections each of which operating in one of a plurality of loading states, the measured loading of the first power domain representative of a combination of the one or more loading states of the one or more circuit sections of the first power domain; and
   determining a respective clock rate for each of the one or more circuit sections of the first power domain to be a first clock rate among a plurality of clock rates corresponding to a respective loading state of a plurality of loading states, the plurality of clock rates respectively corresponding to the plurality of loading states.
14. The method of clause 13, further comprising referring a look-up table which records the plurality of clock rates respectively corresponding to the plurality of loading states.
15. The method of clause 13, further comprising:
   determining one or more voltage levels for the one or more circuit sections of the first power domain, each of the one or more voltage levels corresponding to the respective clock rate of a respective one of the one or more circuit sections of the first power domain; and
   determining a voltage level provided to the first power domain according to the one or more voltage levels for the one or more circuit sections of the first power domain.
16. The method of clause 15, wherein the determining of the one or more voltage levels for the one or more circuit sections comprises determining the respective voltage level for each of the one or more circuit sections of the first power domain to be a voltage level among a plurality of voltage levels corresponding to a respective clock rate of the plurality of clock rates, the plurality of voltage levels respectively corresponding to the plurality of clock rates.
17. The method of clause 16, wherein the determining of the one or more voltage levels for the one or more circuit sections further comprises referring a look-up table which records the plurality of voltage levels respectively corresponding to the plurality of voltage levels for the first power domain.
18. The method of clause 15, wherein the determining of the voltage level provided to the first power domain according to the one or more voltage levels of the one or more circuit sections comprises identifying a highest voltage level among the determined one or more voltage levels for the one or more circuit sections as the voltage level provided to the first power domain.
19. The method of clause 13, further comprising:
   measuring a loading of a second power domain, the second power domain comprising one or more circuit sections each of which operating in one of a plurality of loading states, the measured loading of the second power domain representative of a combination of the one or more loading states of the one or more circuit sections of the second power domain; and
   determining a respective clock rate for each of the one or more circuit sections of the second power domain to be a second clock rate among the plurality of clock rates corresponding to a respective loading state of the plurality of loading states.
20. The method of clause 19, further comprising:
   determining one or more voltage levels for the one or more circuit sections of the second power domain, each of the one or more voltage levels corresponding to the respective clock rate of a respective one of the one or more circuit sections of the second power domain; and
   determining a voltage level provided to the second power domain according to the one or more voltage levels for the one or more circuit sections of the second power domain.
21. An apparatus, comprising:
   a first power domain comprising one or more circuit sections each of which operating in one of a plurality of loading states;
   a first loading measurement circuit coupled to the first power domain, the first loading measurement circuit configured to measure a loading of the first power domain by determining a respective loading state of each of the one or more circuit sections of the first power domain, the measured loading of the first power domain representative of a combination of the one or more loading states of the one or more circuit sections of the first power domain; and
   a first determination circuit coupled to the first loading measurement circuit, the first determination circuit configured to determine at least one operating parameter of the first power domain according to the measured loading of the first power domain.
22. The apparatus of clause 21, wherein each of the one or more circuit sections of the first power domain respectively comprises one or more functional blocks each of which operating in one of a plurality of operational states at a time of the measuring, and wherein the loading state of each of the one or more circuit sections of the first power domain is based on a combination of one or more operational states of the one or more functional blocks of the respective circuit section at the time of the measuring.
23. The apparatus of clause 22, wherein the first determination circuit is further configured to determine the loading state of each of the one or more circuit sections of the first power domain according to the one or more operational states of the one or more functional blocks of the respective circuit section and one or more weighting coefficients associated with the one or more functional blocks of the respective circuit section.
24. The apparatus of clause 21, wherein the at least one operating parameter of the first power domain comprises one or more respective clock rates for the one or more circuit sections of the first power domain.
25. The apparatus of clause 24, wherein, in determining the at least one operating parameter of the first power domain according to the measured loading of the first power domain, the first determination circuit is configured to determine the respective clock rate for each of the one or more circuit sections of the first power domain to be a clock rate among a plurality of clock rates corresponding to a respective loading state of a plurality of loading states, the plurality of clock rates respectively corresponding to the plurality of loading states.
26. The apparatus of clause 25, wherein, in determining the at least one operating parameter of the first power domain according to the measured loading of the first power domain, the first determination circuit is further configured to refer a look-up table which records the plurality of clock rates respectively corresponding to the plurality of loading states.
27. The apparatus of clause 24, wherein the at least one operating parameter of the first power domain comprises a voltage level provided to the first power domain.
28. The apparatus of clause 27, wherein, in determining the at least one operating parameter of the first power domain according to the measured loading of the first power domain, the first determination circuit is configured to perform operations comprising:
   determining one or more voltage levels for the one or more circuit sections, each of the voltage levels corresponding to the respective clock rate of a respective one of the one or more circuit sections; and
   determining the voltage level provided to the first power domain according to the one or more voltage levels for the one or more circuit sections.
29. The apparatus of clause 28, wherein, in determining the one or more voltage levels for the one or more circuit sections, the first determination circuit is configured to determine the respective voltage level for each of the one or more circuit sections of the first power domain to be a voltage level among a plurality of voltage levels corresponding to a respective clock rate of a plurality of clock rates, the plurality of voltage levels respectively corresponding to the plurality of clock rates.
30. The apparatus of clause 29, wherein, in determining the one or more voltage levels for the one or more circuit sections, the first determination circuit is further configured to refer a look-up table which records the plurality of voltage levels respectively corresponding to the plurality of voltage levels for the first power domain.
31. The apparatus of clause 28, wherein, in determining the voltage level provided to the first power domain according to the one or more voltage levels for the one or more circuit sections, the first determination circuit is configured to identify a highest voltage level among the determined one or more voltage levels for the one or more circuit sections as the voltage level provided to the first power domain.
32. The apparatus of clause 21, further comprising:
   a second power domain different from the first power domain, the second power domain comprising one or more circuit sections each of which operating in one of a plurality of loading states;
   a second loading measurement circuit coupled to the second power domain, the second loading measurement circuit configured to measure a loading of the second power domain by determining a respective loading state of each of the one or more circuit sections of the second power domain, the measured loading of the second power domain representative of a combination of the one or more loading states of the one or more circuit sections of the second power domain; and
   a second determination circuit coupled to the second loading measurement circuit, the second determination circuit configured to determine at least one operating parameter of the second power domain according to the measured loading of the second power domain.
33. The apparatus of clause 32, wherein the first power domain is powered by a first power source, and wherein the second power domain is powered by a second power source different from the first power source.
33. The apparatus of clause 32, wherein the first power domain and the second power domain are integral parts of a single integrated-circuit (IC) chip.

## Claims

1. A method, comprising:
measuring a loading of a first power domain, the first power domain comprising one or more circuit sections each of which operating in one of a plurality of loading states, wherein the measuring of the loading of the first power domain comprises determining a respective loading state of each of the one or more circuit sections of the first power domain, the measured loading of the first power domain representative of a combination of the one or more loading states of the one or more circuit sections; and
determining at least one operating parameter of the first power domain according to the measured loading of the first power domain.

2. The method of Claim 1, wherein one or more of the following applies:
(a) each of the one or more circuit sections of the first power domain respectively comprises one or more functional blocks each of which operating in one of a plurality of operational states at a time of the measuring, and wherein the loading state of each of the one or more circuit sections of the first power domain is based on a combination of one or more operational states of the one or more functional blocks of the respective circuit section at the time of the measuring;
(b) the at least one operating parameter of the first power domain comprises one or more respective clock rates for the one or more circuit sections of the first power domain;
(c) the at least one operating parameter of the first power domain comprises a voltage level provided to the first power domain; or
(d) further comprising:
measuring a loading of a second power domain different from the first power domain, the second power domain comprising one or more circuit sections each of which operating in one of a plurality of loading states, wherein the measuring of the loading of the second power domain comprises determining a respective loading state of each of the one or more circuit sections of the second power domain, the measured loading of the second power domain representative of a combination of the one or more loading states of the one or more circuit sections; and
determining at least one operating parameter of the second power domain according to the measured loading of the second power domain.

3. The method of Claim 2, further comprising determining the loading state of each of the one or more circuit sections of the first power domain according to the one or more operational states of the one or more functional blocks of the respective circuit section and one or more weighting coefficients associated with the one or more functional blocks of the respective circuit section.

4. The method of Claim 2, wherein the determining of the at least one operating parameter of the first power domain according to the measured loading of the first power domain comprises determining the respective clock rate for each of the one or more circuit sections of the first power domain to be a clock rate among a plurality of clock rates corresponding to a respective loading state of a plurality of loading states, the plurality of clock rates respectively corresponding to the plurality of loading states.

5. The method of Claim 2, wherein the determining of the at least one operating parameter of the first power domain according to the measured loading of the first power domain comprises:
determining one or more voltage levels for the one or more circuit sections, each of the voltage levels corresponding to the respective clock rate of a respective one of the one or more circuit sections; and
determining the voltage level provided to the first power domain according to the one or more voltage levels for the one or more circuit sections.

6. The method of Claim 5, wherein
(a) the determining of the one or more voltage levels for the one or more circuit sections comprises determining the respective voltage level for each of the one or more circuit sections of the first power domain to be a voltage level among a plurality of voltage levels corresponding to a respective clock rate of a plurality of clock rates, the plurality of voltage levels respectively corresponding to the plurality of clock rates; or
(b) the determining of the voltage level provided to the first power domain according to the one or more voltage levels for the one or more circuit sections comprises identifying a highest voltage level among the determined one or more voltage levels for the one or more circuit sections as the voltage level provided to the first power domain.

7. A method, comprising:
measuring a loading of a first power domain, the first power domain comprising one or more circuit sections each of which operating in one of a plurality of loading states, the measured loading of the first power domain representative of a combination of the one or more loading states of the one or more circuit sections of the first power domain; and
determining a respective clock rate for each of the one or more circuit sections of the first power domain to be a first clock rate among a plurality of clock rates corresponding to a respective loading state of a plurality of loading states, the plurality of clock rates respectively corresponding to the plurality of loading states.

8. The method of Claim 7, further comprising one or more of the following:
(a) referring a look-up table which records the plurality of clock rates respectively corresponding to the plurality of loading states;
(b) determining one or more voltage levels for the one or more circuit sections of the first power domain, each of the one or more voltage levels corresponding to the respective clock rate of a respective one of the one or more circuit sections of the first power domain; and
determining a voltage level provided to the first power domain according to the one or more voltage levels for the one or more circuit sections of the first power domain; or
(c) measuring a loading of a second power domain, the second power domain comprising one or more circuit sections each of which operating in one of a plurality of loading states, the measured loading of the second power domain representative of a combination of the one or more loading states of the one or more circuit sections of the second power domain; and
determining a respective clock rate for each of the one or more circuit sections of the second power domain to be a second clock rate among the plurality of clock rates corresponding to a respective loading state of the plurality of loading states.

9. The method of Claim 8, wherein
(a) the determining of the one or more voltage levels for the one or more circuit sections comprises determining the respective voltage level for each of the one or more circuit sections of the first power domain to be a voltage level among a plurality of voltage levels corresponding to a respective clock rate of the plurality of clock rates, the plurality of voltage levels respectively corresponding to the plurality of clock rates; or
(b) the determining of the voltage level provided to the first power domain according to the one or more voltage levels of the one or more circuit sections comprises identifying a highest voltage level among the determined one or more voltage levels for the one or more circuit sections as the voltage level provided to the first power domain.

10. The method of Claim 8, further comprising:
determining one or more voltage levels for the one or more circuit sections of the second power domain, each of the one or more voltage levels corresponding to the respective clock rate of a respective one of the one or more circuit sections of the second power domain; and
determining a voltage level provided to the second power domain according to the one or more voltage levels for the one or more circuit sections of the second power domain.

11. An apparatus, comprising:
a first power domain comprising one or more circuit sections each of which operating in one of a plurality of loading states;
a first loading measurement circuit coupled to the first power domain, the first loading measurement circuit configured to measure a loading of the first power domain by determining a respective loading state of each of the one or more circuit sections of the first power domain, the measured loading of the first power domain representative of a combination of the one or more loading states of the one or more circuit sections of the first power domain; and
a first determination circuit coupled to the first loading measurement circuit, the first determination circuit configured to determine at least one operating parameter of the first power domain according to the measured loading of the first power domain.

12. The apparatus of Claim 11, wherein one or more of the following applies:
(a) each of the one or more circuit sections of the first power domain respectively comprises one or more functional blocks each of which operating in one of a plurality of operational states at a time of the measuring, and wherein the loading state of each of the one or more circuit sections of the first power domain is based on a combination of one or more operational states of the one or more functional blocks of the respective circuit section at the time of the measuring;
(b) wherein the at least one operating parameter of the first power domain comprises one or more respective clock rates for the one or more circuit sections of the first power domain; or
(c) further comprising:
a second power domain different from the first power domain, the second power domain comprising one or more circuit sections each of which operating in one of a plurality of loading states;
a second loading measurement circuit coupled to the second power domain, the second loading measurement circuit configured to measure a loading of the second power domain by determining a respective loading state of each of the one or more circuit sections of the second power domain, the measured loading of the second power domain representative of a combination of the one or more loading states of the one or more circuit sections of the second power domain; and
a second determination circuit coupled to the second loading measurement circuit, the second determination circuit configured to determine at least one operating parameter of the second power domain according to the measured loading of the second power domain.

13. The apparatus of Claim 12, wherein the first determination circuit is further configured to determine the loading state of each of the one or more circuit sections of the first power domain according to the one or more operational states of the one or more functional blocks of the respective circuit section and one or more weighting coefficients associated with the one or more functional blocks of the respective circuit section.

14. The apparatus of Claim 12, wherein,
(a) in determining the at least one operating parameter of the first power domain according to the measured loading of the first power domain, the first determination circuit is configured to determine the respective clock rate for each of the one or more circuit sections of the first power domain to be a clock rate among a plurality of clock rates corresponding to a respective loading state of a plurality of loading states, the plurality of clock rates respectively corresponding to the plurality of loading states; or
(b) the at least one operating parameter of the first power domain comprises a voltage level provided to the first power domain.

15. The apparatus of Claim 14, wherein,
(a) in determining the at least one operating parameter of the first power domain according to the measured loading of the first power domain, the first determination circuit is further configured to refer a look-up table which records the plurality of clock rates respectively corresponding to the plurality of loading states; or
(b) in determining the at least one operating parameter of the first power domain according to the measured loading of the first power domain, the first determination circuit is configured to perform operations comprising:
determining one or more voltage levels for the one or more circuit sections, each of the voltage levels corresponding to the respective clock rate of a respective one of the one or more circuit sections; and
determining the voltage level provided to the first power domain according to the one or more voltage levels for the one or more circuit sections.
